# EUROPÄISCHE PATENTSCHRIFT

(11) **EP 1 247 323 B1**
(45) Veröffentlichungstag und Bekanntmachung des Hinweises auf die Patenterteilung: **31.08.2005**
(21) Anmeldenummer: 01957695.8
(22) Anmeldetag: 28.06.2001
(51) Int. Cl.: H02K 23/66, H02K 11/04

(54) **ELEKTRISCH BETRIEBENER MOTOR**
ELECTRIC MOTOR
MOTEUR ELECTRIQUE

(30) Priorität: 01.07.2000 DE 10032171
(43) Veröffentlichungstag der Anmeldung: 09.10.2002
(73) Patentinhaber: ROBERT BOSCH GMBH, 70442 Stuttgart (DE)
(72) Erfinder: MEYER, Marcus, 76207 Karlsbad (DE); KLIFFKEN, Markus, 89284 Pfaffenhofen (DE); KOTTHAUS, Stefan, 76547 Sinzheim (DE); WOLF, Joerg, 76139 Karlsruhe (DE); SOELLNER, Michael, 77839 Lichtenau (DE)
(74) Vertreter: Gleiss & Grosse
(86) Internationale Anmeldenummer: PCT/DE2001/002330
(87) Internationale Veröffentlichungsnummer: WO 2002/003531

(56) Entgegenhaltungen:
- DE-A- 19 614 216
- US-A- 5 425 165
- PATENT ABSTRACTS OF JAPAN vol. 011, no. 254 (E-533), 18. August 1987 (1987-08-18) -& JP 62 064246 A (SHINKO ELECTRIC CO LTD;OTHERS: 01), 23. März 1987 (1987-03-23)
- PATENT ABSTRACTS OF JAPAN vol. 1995, no. 02, 31. März 1995 (1995-03-31) & JP 06 327195 A (MATSUSHITA ELECTRIC IND CO LTD), 25. November 1994 (1994-11-25)
- PATENT ABSTRACTS OF JAPAN vol. 1997, no. 10, 31. Oktober 1997 (1997-10-31) & JP 09 154260 A (MATSUSHITA ELECTRIC IND CO LTD), 10. Juni 1997 (1997-06-10)

## Beschreibung

Die vorliegende Erfindung betrifft einen elektrisch betriebenen Motor mit einer Welle, die einen Kommutator und ein magnetisches Element aufweist, dessen Drehzahl und/oder Winkelstellung von einem Sensor erfasst wird.

### Stand der Technik

Ein derartiger elektrisch betriebener Motor ist beispielsweise aus der DE 19710015A1 bekannt, die einen elektrisch betriebenen Motor mit einer einen Magnet-Läuferkörper aufweisenden Welle betrifft, dessen Drehzahl von einem auf einer Leiterplatte angeordneten Hall-Sensor abgreifbar ist. Gemäß dieser Druckschrift ist vorgesehen, dass die Leiterplatte mit Lötstiften oder Kontaktschuhen ausgeführt und in einem Bauteil des Motors integriert ist und dass Kontakte, Versorgungs- und Signalleitungen für die Leiterplatte in dem Bauteil des Motors eingespritzt und/oder eingesteckt sind.

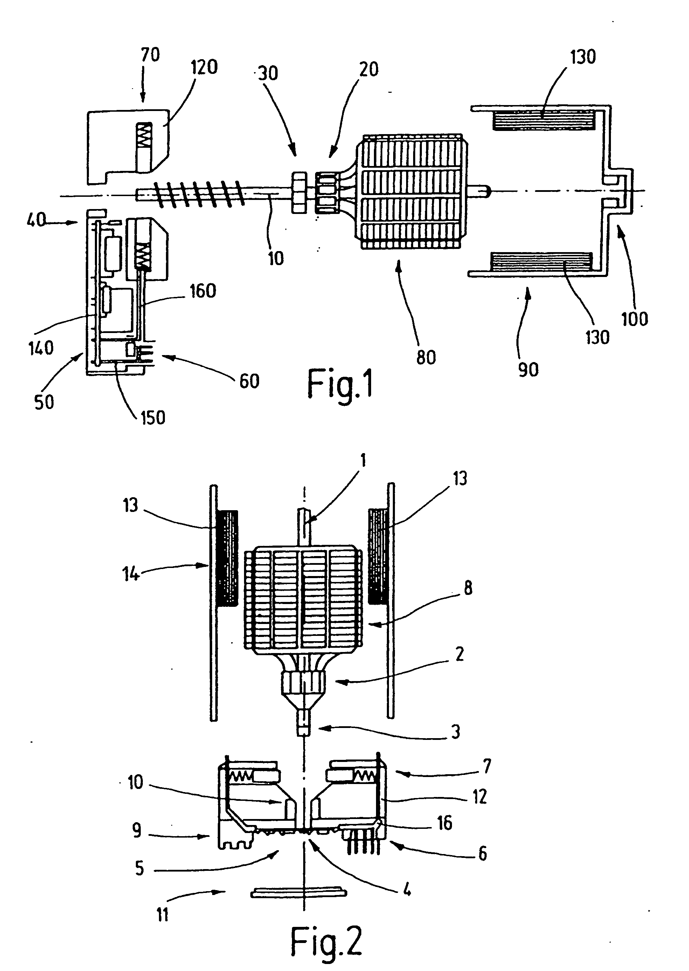

Ein ähnlicher bekannter elektrisch betriebener Motor ist in Figur 1 dargestellt. Bei dem in Figur 1 dargestellten Motor trägt eine Welle 10 ein magnetisches Element 30, das benachbart zu einem Kommutator 20 angeordnet ist. Die Kontakte des Kommutators 20 stehen mit den Wicklungen eines Ankers 80 in Verbindung. Ein Polgehäuse 90 trägt Magnete 130, die dazu vorgesehen sind, mit dem Anker 80 beziehungsweise den Ankerwicklungen zusammenzuwirken. Zur Lagerung der Welle 10 ist ein Wellenlager 100 im Bereich der Stirnseite des Polgehäuses 90 vorgesehen. Ein Gehäuseteil 120 nimmt Bürsten/Federanordnungen 70 auf, die dazu vorgesehen sind, mit dem Kommutator 20 zusammenzuwirken. Im zusammengesetzten Zustand des Motors liegt das Gehäuseteil 120 an dem Polgehäuse 90 an. Das Gehäuseteil 120 nimmt eine Leiterplatte 140 auf, auf der neben anderen elektronischen Bauteilen, die eine insgesamt mit 50 bezeichnete Elektronikbaugruppe bilden, ein oder zwei Hall-Sensoren 40 angeordnet sind, die mit dem magnetischen Element 30 zusammenwirken, um die Drehzahl und/oder die Winkelstellung der Welle 10 zu erfassen. Weiterhin steht ein Stecker 60 mit der Leiterplatte 140 in Verbindung, um den elektrisch betriebenen Motor in geeigneter Weise mit entsprechenden Leitungen zu verbinden.

Derartige elektrisch betriebene Motoren können beispielsweise im Automobilbereich als elektrisch betätigte Stellmotoren für.verschiedene Anwendungsmöglichkeiten eingesetzt werden. In diesem Zusammenhang ist insbesondere ein Einsatz als Fensterheber- oder Schiebedachmotor denkbar. In diesem Fall ist es beispielsweise erforderlich die Drehzahl und/oder Winkelstellung des magnetischen Elements und damit der Welle zu erfassen, um Funktionen wie "Softstart" oder "Einklemmschutz" zu verwirklichen, wobei die EMV-Richtlinien (EMV = elektromagnetische Verträglichkeit) berücksichtigt werden müssen.

Die bekannten elektrisch betriebenen Motoren weisen eine relativ große Anzahl von Bauteilen auf, so dass die Montage entsprechend aufwendig ist. Bei dem in Figur 1 dargestellten Motor werden beispielsweise zwei verschiedene Schaltungsträger eingesetzt, nämlich ein Stanzgitter 150, 160, das die Leiterplatte 140 mit dem Stecker 60 und den Bürsten/Federanordnungen 70 verbindet, sowie die eigentliche Leiterplatte 140, auf welcher ein Microprozessor, verschiedene SMD-Bauteile und ein Relais montiert sind. Insbesondere dann, wenn anstelle des Relais Transistoren verwendet werden, muss ein hoher Aufwand zur Wärmeabfuhr betrieben werden, da die Verlustleistung entsprechender Transistoren im Betrieb typischerweise bis zu 10 W betragen kann.

Ein weiterer Nachteil der bekannten elektrisch betriebenen Motoren besteht darin, dass aufgrund der relativ komplexen Form der Elektronikbaugruppe 50 ein kompliziert geformtes Dichtgummi erforderlich ist, um den elektrisch betriebenen Motor gegebenenfalls vor Spritzwasser zu schützen.

Wenn der Sensor 40 durch einen oder mehrere Hall-Sensoren gebildet ist, kann pro Umdrehung der Welle eine der Anzahl der Pole des magnetischen Elements 30 entsprechende Anzahl von Impulsen detektiert werden. Diese Impulse werden beispielsweise durch einen Microprozessor ausgewertet.

Weiter ist aus der DE-A-19614216 ein elektrisch betriebener Motor gemäß dem Oberbegriff des Anspruchs 1 bekannt, bei dem der Sensor zusammen in der Nähe der Bürsten innerhalb eines becherförmig ausgebildeten Abschirmungsgehäuses angeordnet ist, so dass infolge des Abriebs der Bürsten entstehender Staub bis zum Sensor gelangen kann.

Aus der US-A-5425165 ist es bei einem elektrischen Motor ohne Kommutator zwar bereits an sich bekannt, die Winkelstellung eines an einem Ende einer Welle des Motors angeordneten magnetischen Elements mit Hilfe von Sensoren zu erfassen, die von einer Leiterplatte getragen werden. Das magnetische Element erstreckt sich dort durch eine Öffnung eines am Stirnende geschlossenen Gehäuseabschnitts bis knapp über die Oberfläche der an der Innenseite der Stirnwand des Gehäuseabschnitts befestigten Leiterplatte, wobei die Sensoren jedoch auf der dem magnetischen Element zugewandten Innenseite der Leiterplatte angeordnet, so dass sie sich innerhalb des Motorraums befinden und aus den Lagern austretendem Fett und anderen schädlichen Einflüssen ausgesetzt sind.

Bei einem in der JP62064246 offenbarten Elektromotor ist eine Leiterplatte in einem Spalt zwischen einem Gehäuse und einem im Querschnitt fünfeckigen Statorjoch des Motors angeordnet, um die Kühlwirkung zu verbessern.

### Vorteile der Erfindung

Dadurch dass bei dem erfindungsgemäßen Motor auf der vom Kommutator abgewandten Außenseite des Motordeckels ein Substrat befestigt ist, das wiederum auf seiner Außenseite den Sensor und elektronische Bauteile trägt, und dadurch dass sich das magnetische Element durch die Öffnung bis knapp über die von elektronischen Bauteilen freie Innenseite des Substrats erstreckt, können der Motorraum einerseits und die vom Substrat getragenen elektronischen Bauteile einschließlich des Sensors andererseits durch das die Öffnung verschließende Substrat räumlich voneinander getrennt und der Sensor vor schädlichen Einflüssen aus dem Motorraum geschützt werden, wobei er jedoch die Drehbewegung des magnetischen Elements durch das Substrat hindurch problemlos detektieren kann.

Vorzugsweise ist der Sensor ein hochauflösender Sensor, der durch einen AMR-Sensor oder einen GMR-Sensor gebildet werden kann. Die Bezeichnung AMR ist dabei von anisotrop magnetoresistiv abgeleitet. Derartige AMR-Sensoren ermöglichen einen sehr kompakten, kontakt- und berührungslosen Aufbau von Winkelsensoren. Als Trägermaterial können oxidierte Siliziumscheiben dienen, in die prinzipiell auch Elektronik zur Signalaufbereitung integriert werden kann. Das steuernde Magnetfeld würde im vorliegenden Fall von dem sich drehenden magnetischen Element erzeugt. Ähnliche Vorteile bietet die Verwendung eines GMR-Sensors, wobei die Bezeichnung GMR von giant magnetoresistiv abgeleitet ist.

Das magnetische Element ist vorzugsweise benachbart zum Kommutator angeordnet. Dadurch wird gewährleistet, dass die den Sensor umfassende elektronische Baugruppe örtlich nahe zu den Bürsten/Federanordnungen angeordnet ist, die mit dem Kommutator zusammenwirken.

Weiter ist ein Motordeckel vorgesehen, der eine Öffnung aufweist, durch die sich das magnetische Element zumindest abschnittsweise erstreckt. Neben einem kompakten Aufbau ermöglicht dieser Motordeckel, eine optimale Anordnung des Sensors 40.

Dies gilt insbesondere dann, wenn ein erfindungsgemäß elektronische Bauteile tragendes Substrat vorgesehen ist, das an dem Motordeckel befestigt ist. Durch dieses Substrat kann in vielen Fällen auf eine Leiterplatte verzichtet werden. Dies gilt insbesondere dann, wenn die beim Stand der Technik vorhandenen SMDs (surface mounted devices = oberflächenmontierte Bauteile) in einer integrierten Schaltung integriert werden, beispielsweise einem Microprozessor oder einer Logikschaltung. Die auf dem Substrat angeordneten Bauteile können beispielsweise Transistoren, RC-Glieder zur Entstörung, Drosseln und/oder Relais und so weiter umfassen.

Der Motordeckel kann vorteilhafterweise als Wärmesenke dienen.

Weiterhin wird bevorzugt, dass das die Bauteile tragende Substrat eine gute Wärmeleitfähigkeit aufweist. Die gute Wärmeleitfähigkeit des Substrats trägt dazu bei, die durch die Bauteile erzeugte Wärme abzuleiten, um so eine Überhitzung der Bauteile zu vermeiden.

Insbesondere wenn der Motordeckel als Wärmesenke dient, ist das die Bauteile tragende Substrat vorzugsweise mit dem Motordeckel verklebt. Obwohl auch andere Befestigungsmöglichkeiten denkbar sind, kann die Wärmeableitung bei dieser Befestigungsart positiv beeinflusst werden, insbesondere wenn ein geeigneter Klebstoff verwendet wird.

Erfindungsgemäß ist das die Bauteile tragende Substrat auf der dem Kommutator abgewandten Seite des Motordeckels angeordnet. Das magnetische Element beziehungsweise das Wellenende kann sich dann bis knapp über die freie Oberfläche des Substrats erstrecken, so dass ein auf dem Substrat angeordneter Sensor die Drehbewegung des magnetischen Elements problemlos detektieren kann.

Vorzugsweise ist weiterhin eine Abdeckplatte vorgesehen, die das die Bauteile tragende Substrat zumindest teilweise, vorzugsweise jedoch vollständig abdeckt. Die Abdeckplatte dient dazu, die Bauteile beispielsweise vor mechanischen Belastungen oder schädlichen Substanzen, wie von außen eindringender Feuchtigkeit, zu schützen.

Vorzugsweise ist weiterhin ein Gehäuseteil vorgesehen, das zumindest eine Bürsten/Federanordnung trägt und den Kommutator zumindest abschnittsweise aufnimmt.

Der Motordeckel ist vorzugsweise an diesem Gehäuseteil befestigt, was zu einem kompakten Aufbau beiträgt.

Das Gehäuseteil trägt vorzugsweise ein Wellenlager. Dieses Wellenlager kann beispielsweise unmittelbar benachbart zum Motordeckel angeordnet sein.

Vorzugsweise ist die dem Wellenlager zugewandte Seite des Kommutators abgeflacht. Dadurch wird das Einführen des Ankers in das bereits mit den Bürsten/Federanordnungen bestückten Gehäuseteil erleichtert, so dass die Montage schneller, einfacher und damit kostengünstiger durchgeführt werden kann.

Um die Welle in zumindest eine Richtung axial zu fixieren weist der Motordeckel vorzugsweise ein Kegellager auf.

### Zeichnungen

Die Erfindung wird nachfolgend anhand der zugehörigen Zeichnungen noch näher erläutert.

### Es zeigen:

- Figur 1: einen gattungsgemäßen elektrisch betriebenen Motor gemäß dem Stand der Technik; und
- Figur 2: eine Ausführungsform des elektrisch betriebenen Motors gemäß der vorliegenden Erfindung.

### Beschreibung des Ausführungsbeispiels

Figur 2 zeigt eine Ausführungsform des erfindungsgemäßen elektrisch betriebenen Motors in Form eines mechatronischen DC-Stellmotors mit einem hochauflösenden Sensor. Dieser Motor weist eine Welle 1 auf, die einen Anker 8 mit zugehörigen Wicklungen sowie einen Kommutator 2 trägt. Ein magnetisches Element 3 ist an einem Wellenende angeordnet. Ein Polgehäuse 14 trägt Magnete 13, die mit dem Anker 8 beziehungsweise den zugehörigen Wicklungen in bekannter Weise zusammenwirken. Ein Gehäuseteil 12 trägt mehrere Bürsten/Federanordnungen 7 und nimmt den Kommutator 2 im zusammengesetzten Zustand des Motors auf. Weiterhin trägt das Gehäuseteil 12 ein Wellenlager 10, durch das sich das magnetische Element 3 im zusammengesetzten Zustand des Motors hindurch erstreckt. Ein Motordeckel 9 ist mit dem Gehäuseteil 12 verklebt und weist eine Öffnung auf, durch die sich das magnetische Element 3 zumindest abschnittsweise hindurch erstreckt. Die dem Gehäuseteil 12 abgewandte Seite des Motordeckels 9 ist mit einem Substrat verklebt, das Bauteile trägt, die insgesamt als elektronische Baugruppe 5 angedeutet sind. Im Bereich der Öffnung des Motordeckels 9 ist ein Sensor 4 in Form eines hochauflösenden Sensors, beispielsweise eines AMR-Sensors oder eines GMR-Sensors angeordnet, der mit dem magnetischen Element 3 zusammenwirkt, das sich durch die Öffnung in dem Motordeckel 9 erstreckt. Zum Schutz der elektronischen Baugruppe 5 ist eine Abdeckplatte 11 vorgesehen. Ein Anschlusselement in Form eines Steckers 6 steht mit den Bauteilen der elektronischen Baugruppe 5, dem Sensor 4 und gegebenenfalls den Anschlüssen der Bürsten/Federanordnungen 7 in Verbindung.

Die elektrische Verbindung des Substrats, das beispielsweise ein DSH-Substrat (DSH = Dickschichthybrid) oder ein IMS-Substrat (IMS = Isoliertes Metallsubstrat) sein kann, mit dem Stecker 6, den Bürsten/Federanordnungen 7, einem gegebenenfalls vorgesehenen Pufferkondensator und einer gegebenenfalls vorgesehenen Drossel wird mit Hilfe eines räumlich strukturierten Schaltungsträgers wie zum Beispiel ein umspritztes Stanzgitter 16 oder auch strukturiert metallisierte Hochtemperaturthermoplaste (3dimenional molded interconnect device = 3D MID) hergestellt. In diesen Schaltungsträger kann auch der Motordeckel eingegossen sein. Durch die Variation von Teilen des entsprechenden Spritwerkzeuges können beispielsweise unterschiedliche Stecker 6 realisiert werden, die somit an spezielle Kundenwünsche angepasst werden können.

Die Verbindung der elektrischen Bauelemente mit dem Schaltungsträger kann beispielsweise das Schweißen, Löten oder Hot-Stacking umfassen. Das Polgehäuse 14 mit den Magneten 13 wird vorzugsweise um den Motordeckel 9 beziehungsweise das Gehäuseteil 12 dicht verschlossen, beispielsweise rolliert. Die Wärmeableitung kann dann über Kühlrippen und/oder das Polgehäuse 14 erfolgen.

Ein weiterer Vorteil der erfindungsgemäßen Lösung besteht darin, dass der Einbauraum aufgrund der nun nicht mehr seitlich angeordneten elektronischen Baugruppe verkleinert werden kann.

## Patentansprüche

1. Elektrisch betriebener Motor mit einer Welle (1), die einen Kommutator (2) und ein magnetisches Element (3) aufweist, das an einem Ende der Welle (1) angeordnet ist und dessen Drehzahl und/oder Winkelstellung von einem Sensor (4) erfasst wird, sowie mit einem Motordeckel (9), der eine Öffnung aufweist, durch die sich das magnetische Element (3) zumindest abschnittsweise erstreckt, **dadurch gekennzeichnet, dass** auf der vom Kommutator (2) abgewandten Seite des Motordeckels (9) ein Substrat befestigt ist, das auf seiner vom Kommutator (2) abgewandten Seite den Sensor (4) und elektronische Bauteile (5) trägt, und dass sich das magnetische Element (3) durch die Öffnung bis knapp über die von elektronischen Bauteilen (5) freie, dem Kommutator (2) zugewandte Seite des Substrats erstreckt.

2. Elektrisch betriebener Motor nach Anspruch 1, **dadurch gekennzeichnet, dass** der Sensor (4) ein hochauflösender Sensor (4) ist.

3. Elektrisch betriebener Motor nach einem der vorhergehenden Ansprüche, **dadurch gekennzeichnet, dass** der Sensor (4) ein AMR-Sensor oder ein GMR-Sensor ist.

4. Elektrisch betriebener Motor nach einem der vorhergehenden Ansprüche, **dadurch gekennzeichnet, dass** das magnetische Element (3) benachbart zum Kommutator (2) angeordnet ist.

5. Elektrisch betriebener Motor nach einem der vorhergehenden Ansprüche, **dadurch gekennzeichnet, dass** der Motordeckel (9) als Wärmesenke dient.

6. Elektrisch betriebener Motor nach einem der vorhergehenden Ansprüche, **dadurch gekennzeichnet, dass** das die Bauteile (5) tragende Substrat eine gute Wärmeleitfähigkeit aufweist.

7. Elektrisch betriebener Motor nach einem der vorhergehenden Ansprüche, **dadurch gekennzeichnet, dass** das die Bauteile (5) tragende Substrat mit dem Motordeckel (9) verklebt ist.

8. Elektrisch betriebener Motor nach einem der vorhergehenden Ansprüche, **dadurch gekennzeichnet, dass** eine Abdeckplatte (11) vorgesehen ist, die das die Bauteile (5) tragende Substrat zumindest teilweise abdeckt.

9. Elektrisch betriebener Motor nach einem der vorhergehenden Ansprüche, **dadurch gekennzeichnet, dass** ein Gehäuseteil (12) vorgesehen ist, das eine Bürsten/Federanordnung (7) trägt und den Kommutator (2) zumindest abschnittsweise aufnimmt.

10. Elektrisch betriebener Motor nach Anspruch 9, **dadurch gekennzeichnet, dass** der Motordeckel (9) an dem Gehäuseteil (12) befestigt ist.

11. Elektrisch betriebener Motor nach Anspruch 9 oder 10, **dadurch gekennzeichnet, dass** das Gehäuseteil (12) ein Wellenlager (10) trägt.

12. Elektrisch betriebener Motor nach einem der vorhergehenden Ansprüche, **dadurch gekennzeichnet, dass** der Motordeckel (9) ein Kegellager aufweist, um die Welle (1) in zumindest einer Richtung axial zu fixieren.

## Claims

1. Electrically powered motor with a shaft (1) having a commutator (2) and a magnetic element (3) located at the end of the shaft (1) and whose RPM and/or angle pitch is picked up by a sensor (4) as well as with a motor lid (9) having an aperture through which the magnetic element (3) extends at least in certain sections **characterised in that** on the side of the motor lid (9) facing away from the commutator (2) a substratum is fastened that supports on its side facing away from the commutator (2) the sensor (4) and the electronic components (5) and that the magnetic element (3) extends through the aperture up until just above the side of the substratum that is free of electronic components (5) and faces the commutator (2).

2. Electrically powered motor according to claim 1 **characterised in that** the sensor (4) is a high-resolution sensor (4).

3. Electrically powered motor according to one of the previous claims **characterised in that** the sensor (4) is an AMR sensor or a GMR sensor.

4. Electrically powered motor according to one of the previous claims **characterised in that** the magnetic element (3) is located adjacent to the commutator (2).

5. Electrically powered motor according to one of the previous claims **characterised in that** the motor lid (9) serves as a heat sink.

6. Electrically powered motor according to one of the previous claims **characterised in that that** the substratum supporting the components (5) possesses good heat conducting capabilities.

7. Electrically powered motor according to one of the previous claims **characterised in that** the substratum supporting the components (5) is glued to the motor lid (9).

8. Electrically powered motor according to one of the previous claims **characterised in that** a covering plate (11) is provided that at least partially covers up the substratum supporting the components (5).

9. Electrically powered motor according to one of the previous claims **characterised in that** a part of the casing (12) is provided that supports a brush/spring device (7) and at least in certain sections accommodates the commutator (2).

10. Electrically powered motor according to claim 9 **characterised in that** the motor lid (9) is fastened to the part of the casing (12).

11. Electrically powered motor according to Claim 9 or Claim 10 **characterised in that** the part of the casing (12) supports a shaft bearing (10).

12. Electrically powered motor according to one of the previous claims **characterised in that** the motor lid (9) has a cone bearing in order to set the shaft (1) axially in at least one direction.

## Revendications

1. Moteur électrique avec un arbre (1) présentant un commutateur (2) et un élément magnétique (3) qui est disposé sur une extrémité de l'arbre (1) et dont la vitesse de rotation et/ou la position angulaire est détectée par un capteur (4), ainsi qu'avec un couvercle de moteur (9) présentant une ouverture à travers laquelle l'élément magnétique (3) s'étend au moins par passages, **caractérisé en ce qu'**un substrat est fixé sur le côté du couvercle du moteur (9) détourné du commutateur (2), lequel substrat porte sur son côté détourné du commutateur (2) le capteur (4) et des éléments de construction électroniques (5), et **en ce que** l'élément magnétique (3) s'étend par l'ouverture jusqu'au côté du substrat orienté vers le commutateur (2) libre d'éléments électroniques (5).

2. Moteur électrique selon la revendication 1, **caractérisé en ce que** le capteur (4) est un capteur à haute résolution.

3. Moteur électrique selon une des revendications précédentes, **caractérisé en ce que** le capteur (4) est un capteur AMR ou un capteur GMR.

4. Moteur électrique selon une des revendications précédentes, **caractérisé en ce que** l'élément magnétique (3) est disposé près du commutateur (2).

5. Moteur électrique selon une des revendications précédentes, **caractérisé en ce que** le couvercle du moteur (9) sert de drain de chaleur.

6. Moteur électrique selon une des revendications précédentes, **caractérisé en ce que** le substrat portant les éléments de construction (5) présente une bonne qualité de conduite de chaleur.

7. Moteur électrique selon une des revendications précédentes, **caractérisé en ce que** le substrat portant les éléments de construction (5) est collé avec le couvercle du moteur (9).

8. Moteur électrique selon une des revendications précédentes, **caractérisé en ce qu'**on a prévu une plaque de recouvrement (11) qui recouvre partiellement le substrat portant les éléments de construction (5).

9. Moteur électrique selon une des revendications précédentes, **caractérisé en ce qu'**on a prévu une partie de boîtier (12) qui porte un dispositif à brosse / à ressort (7) et reçoit le commutateur (2) au moins par passages.

10. Moteur électrique selon la revendication 9, **caractérisé en ce que** le couvercle du moteur (9) est fixé sur la partie du boîtier (12).

11. Moteur électrique selon la revendication 9 ou 10, **caractérisé en ce que** la partie de boîtier (12) porte un palier d'arbre (10).

12. Moteur électrique selon une des revendications précédentes, **caractérisé en ce que** le couvercle du moteur (9) présente un roulement conique pour fixer l'arbre (1) dans au moins une direction axiale.
